# EUROPÄISCHE PATENTSCHRIFT

(11) **EP 2 778 381 B1**
(45) Veröffentlichungstag und Bekanntmachung des Hinweises auf die Patenterteilung: **08.06.2016**
(21) Anmeldenummer: 14156487.2
(22) Anmeldetag: 25.02.2014
(51) Int. Cl.: F02M 25/03, F02M 25/022, F02M 55/00

(54) **Einspritzsystem und Verfahren zum Betreiben eines Einspritzsystems**
Injection system and method for operating an injection system
Système d'injection et procédé de fonctionnement d'un système d'injection

(30) Priorität: 14.03.2013 DE 102013204474
(43) Veröffentlichungstag der Anmeldung: 17.09.2014
(73) Patentinhaber: Bayerische Motoren Werke Aktiengesellschaft, 80809 München (DE)
(72) Erfinder: Dr.Rubbert, Stephan, 85757 Karlsfeld (DE); Dr.Schünemann, Erik, 80809 München (DE)

(56) Entgegenhaltungen:
- US-A- 3 696 795
- US-A- 3 983 882

## Beschreibung

Die Erfindung betrifft ein Verfahren zum Betreiben eines Einspritzsystems gemäß dem Oberbegriff des Anspruchs 1.

Bei Verbrennungskraftmaschinen, insbesondere bei Ottomotoren für Personenkraftfahrzeuge, kann eine Einspritzung von Wasser in die Brennkammern der Zylinder bzw. in ein davor liegendes Saugrohr die Fahreigenschaften günstig beeinflussen. Beispielsweise lässt sich eine klopfende Verbrennung unterdrücken und der Wirkungsgrad der Verbrennung und damit die Leistung steigern bzw. der Kraftstoffverbrauch senken.

Um das Wasser zuzuführen, kann neben dem Injektor für den Kraftstoff ein weiterer Injektor für das Wasser vorgesehen sein. Dieser wird beispielsweise analog zum Kraftstoff-Injektor von einer Hochdruck-Förderpumpe versorgt, die das Wasser aus einem Vorratsbehälter auf das zum Einspritzen erforderliche hohe Druckniveau fördert. Ein Ventil des Injektors sorgt dafür, dass das Wasser zum richtigen Zeitpunkt und in der richtigen Dosis in die Brennkammer eingespritzt wird.

Anders als beim Kraftstoff-Einspritzsystem muss jedoch bei niedrigen Umgebungstemperaturen beim Abstellen des Fahrzeugs der Gefahr begegnet werden, dass das Wasser im Einspritzsystem einfriert.

In der gattungsgemäßen US 3 983 822 wird dies erreicht, indem thermostatisch gesteuerte Ventile unter anderem an einem gesonderten Anschluss des Wasser-Injektors vorgesehen sind, die geöffnet werden, sobald die Außentemperatur bei abgestelltem Motor unter einen vorgegebenen Wert sinkt. Auch in der US 3 696 795 sind gesonderte Ventile vorgesehen, über die die wasserführenden Zweige des Systems als Schutz gegen das Einfrieren entleert werden können.

Aufgabe der Erfindung ist es, den Injektor eines solchen Wasser-Einspritzsystems auf einfache Weise vor Schäden zu schützen.

Das erfindungsgemäße Verfahren resultiert bei abgeschalteter Verbrennungskraftmaschine in einem teilweise gasgefüllten Arbeitsraum des Injektors . Die Erfindung betrifft ein Verfahren zum Betreiben eines Einspritzsystems zum Einspritzen von Wasser in einen Einspritzbereich einer Verbrennungskraftmaschine mittels eines Injektors mit einem in einem Normalbetrieb der Verbrennungskraftmaschine wassergefüllten Arbeitsraum, dadurch gekennzeichnet, dass beim Abschalten der Verbrennungskraftmaschine wenigstens ein Teil des im Arbeitsraum des Injektors vorhandenen Wassers durch aus einer der Brennkammer der Verbrennungskraftmaschine in den Arbeitsraum einströmendes Gasgemisch verdrängt und der Arbeitsraum wenigstens teilweise mit dem Gasgemisch gefüllt wird.

Das Abfließen des Wassers aus dem Arbeitsraum wird hier vorteilhaft aktiv durch einströmendes Gas unterstützt, das das Wasser wenigstens teilweise verdrängt. Eine Verdrängung eines Wasservolumens von ca. 15 bis 50 %, insbesondere von 15 bis 30 % des Arbeitsraumvolumens hat sich als ausreichend erwiesen.

Dieses Verfahren ist mit einem Einspritzsystem zum Einspritzen von Wasser in einen Einspritzbereich einer Verbrennungskraftmaschine durchführbar, mit einem Injektor, der einen im Normalbetrieb wassergefüllten Arbeitsraum aufweist, der mit einem Ventil des Injektors in Strömungsverbindung steht. Das Ventil gibt eine Strömungsverbindung vom Arbeitsraum zum Einspritzbereich frei oder verschließt diese. Bei abgeschalteter Verbrennungskraftmaschine ist der Arbeitsraum wenigstens teilweise mit einem Gasgemisch gefüllt. Auf diese Weise steht im Arbeitsraum genügend Raum zur Verfügung, in den sich gefrierendes Wasser ausdehnen kann, ohne dass eine übermäßige Kraft auf die Begrenzungen des Arbeitsraums ausgeübt wird.

Unter dem "Einspritzbereich" wird hier die Brennkammer des Zylinders selbst oder aber ein Abschnitt eines Saugrohrs insbesondere unmittelbar stromaufwärts der Brennkammer verstanden. In beide Bereiche kann eine Wassereinspritzung unter bestimmten Bedingungen im Betrieb der Verbrennungskraftmaschine sinnvoll sein.

Vorzugsweise sind bei abgeschaltetem Motor wenigstens 15 bis 50 % des Volumens des Arbeitsraums mit dem Gasgemisch gefüllt, damit sich gefrierendes Wasser ohne Krafteinwirkung auf die Begrenzungen des Arbeitsraums ausdehnen kann.

Anstelle von reinem Wasser kann stets auch ein Gemisch von Wasser und anderen Flüssigkeiten, zum Beispiel einem Alkohol, verwendet werden, auch wenn in dieser Anmeldung nur der Begriff "Wasser" verwendet wird.

Das Gasgemisch ist vorzugsweise Luft, kann aber beispielsweise auch Luft gemischt mit rückgeführtem Abgas sein.

Beim Abschalten der Verbrennungskraftmaschine ist bevorzugt eine Rückflussmöglichkeit gegeben, sodass Wasser aus dem Arbeitsraum zurück in Richtung eines Vorratsbehälters fließen kann, und das Ventil zur Brennkammer ist geöffnet. Beispielsweise kann eine Wasser-Förderpumpe so geschaltet sein, dass sie einen Rückfluss von Wasser aus dem Arbeitsraum in Richtung des Vorratsbehälters zulässt. Auf diese Weise kann Wasser aus dem Arbeitsraum abfließen, während aus der Brennkammer Gasgemisch nachströmt.

Die Förderpumpe, die im Normalbetrieb Wasser aus dem Vorratsbehälter fördert, wird vorzugsweise beim Abschalten der Verbrennungskraftmaschine so geschaltet, dass Wasser aus dem Arbeitsraum des Injektors abfließen kann.

Wenn eine Strömungsverbindung zwischen dem Arbeitsraum und dem Einspritzbereich hergestellt und ein Einströmen des Gasgemisches in die Brennkammer ermöglicht wird, kann Gas durch die Brennkammer hindurch in den Arbeitsraum einströmen und das dort befindliche Wasser zumindest teilweise verdrängen. Das verdrängte Wasser fließt vorteilhaft in den Vorratsbehälter zurück.

Um das Gasgemisch von außen in die Brennkammer einzulassen, wird vorzugsweise ein Lufteinlassventil so geschaltet, dass das Gasgemisch in die Brennkammer einströmen kann. Hierzu kann das normale Lufteinlassventil des jeweiligen Zylinders der Verbrennungskraftmaschine genutzt werden, das auch im Normalbetrieb das Gasgemisch zum Verbrennen des Kraftstoffs in die Brennkammer zuführt.

Die beschriebenen Schritte erfolgen vorzugsweise gleichzeitig, sodass durch das geöffnete Lufteinlassventil das Gasgemisch in die Brennkammer einströmen und durch das geöffnete Ventil des Injektors das Gasgemisch weiter in den Arbeitsraum des Injektors strömen kann, wo es das dort befindliche Wasser aufgrund des Gasdrucks verdrängt und das Wasser durch eine Wassereinlassleitung zurück zum Vorratsbehälter abfließt.

Das Einströmen des Gasgemisches in den Arbeitsraum des Injektors kann dadurch unterstützt werden, dass ein durch einen in der Brennkammer angeordneter Kolben der Verbrennungskraftmaschine durchgeführter Kompressionshub ausgenutzt wird, um über das Lufteinlassventil einströmendes Gasgemisch durch das Ventil in den Injektor zu pressen, wodurch im Arbeitsraum des Injektors befindliches Wasser wenigstens teilweise aus dem Arbeitsraum verdrängt wird. Bei dem Kompressionshub kann es sich beispielsweise um den oder die letzten Kompressionshub/hübe des Kolbens vor dem Abschalten der Verbrennungskraftmaschine handeln, wobei in diesem Fall die Kraftstoffeinspritzung vorzugsweise bereits eingestellt ist.

Auch die Förderpumpe ist zu diesem Zeitpunkt bevorzugt abgestellt, z.B. indem sie von ihrem Antrieb entkoppelt ist, sodass kein Wasser nachgefördert wird.

Es hat sich gezeigt, dass es unkritisch ist, wenn ein Teil des vor der Einleitung des Gasgemisches im Arbeitsraum vorhandenen Wassers im Arbeitsraum verbleibt, solange ein genügend großes freies Volumen zur Verfügung steht, in das sich das gefrierende Wasser ausdehnen kann.

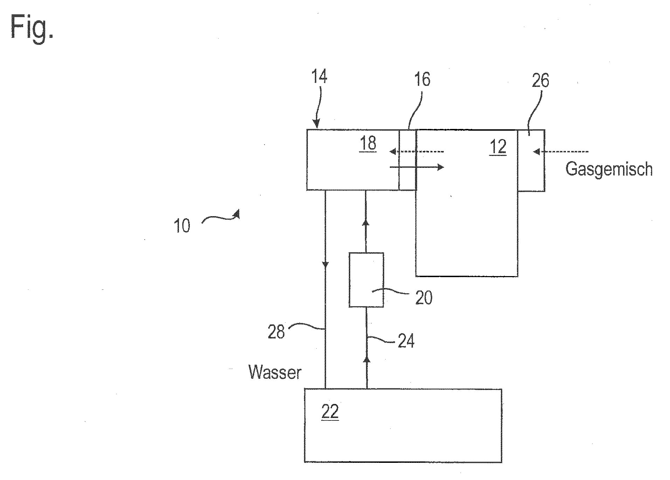

Die Erfindung wird nachfolgend anhand eines Ausführungsbeispiels mit Bezug auf die beigefügte Figur näher beschrieben. Die einzige Figur zeigt eine schematische Ansicht eines erfindungsgemäßen Einspritzsystems.

Das in der Figur schematisch dargestellte Einspritzsystem 10 dient zum Einspritzen von Wasser in eine Brennkammer einer Verbrennungskraftmaschine bzw. einen Abschnitt eines Saugrohrs, der unmittelbar stromaufwärts der Brennkammer gelegen ist. Diese beiden Bereiche der Verbrennungskraftmaschine werden hier unter dem Begriff des "Einspritzbereichs" mit dem Bezugszeichen 12 zusammengefasst.

Der Begriff "Wasser" umfasst hier nicht nur reines Wasser, sondern auch ein Gemisch von Wasser mit anderen Flüssigkeiten, z.B. einem Alkohol.

Die Wassereinspritzung erfolgt in diesem Beispiel parallel zur herkömmlichen Kraftstoffeinspritzung. Bei der Verbrennungskraftmaschine handelt es sich hier um einen benzingetriebenen Ottomotor beispielsweise eines Personenkraftwagens.

Das Einspritzsystem 10 umfasst einen Injektor 14, der im Wesentlichen analog zu einem bekannten zur Kraftstoffeinspritzung verwendeten Injektor aufgebaut ist. Der Injektor enthält ein Ventil 16, hier ein Magnetventil, z.B. ein bekanntes Düsennadel-Ventil, das eine Strömungsverbindung von einem Arbeitsraum 18 des Injektors 14 zum Einspritzbereich 12 freigeben oder verschließen kann. Der Arbeitsraum 18 umfasst sämtliche im Normalbetrieb wassergefüllten Volumina im Injektor 14.

Der Injektor 14 ist in diesem Beispiel zusätzlich zum hier nicht gezeigten Injektor für die Kraftstoffeinspritzung vorgesehen.

Eine vom Injektor 14 separate Förderpumpe 20 fördert Wasser aus einem Vorratsbehälter 22 über eine Zuleitung 24 zum Arbeitsraum 18 des Injektors, wobei das Wasser durch die Förderpumpe 20 gleichzeitig auf das für die Einspritzung erforderliche hohe Druckniveau gebracht wird (etwa 200 bar).

An die Brennkammer ist ein Lufteinlassventil 26 angeschlossen, durch das ein Gasgemisch (Luft oder beispielsweise ein Gemisch aus Luft und rückgeführtem Abgas) in die Brennkammer eingelassen wird, um mit dem zugeführten Kraftstoff zu reagieren.

Beim Abschalten der Verbrennungskraftmaschine wird wenigstens ein Teil des im Arbeitsraum 18 des Injektors 14 im Normalbetrieb vorhandenen Wassers durch über das Lufteinlassventil 26 durch die Brennkammer strömendes Gasgemisch aus dem Arbeitsraum 18 verdrängt. Dies führt dazu, dass bei abgeschalteter Verbrennungskraftmaschine das Volumen des Arbeitsraums 18 maximal zu etwa 50 bis 85 % mit Wasser gefüllt ist.

Die Förderpumpe 20 wird beim oder kurz vor dem Abschalten der Verbrennungskraftmaschine abgeschaltet, sodass kein Wasser mehr über die Zuleitung 24 vom Vorratsbehälter 22 zum Injektor 14 gefördert wird.

Das Lufteinlassventil 26 wird geöffnet, sodass das Gasgemisch in die Brennkammer einströmen kann.

Das Ventil 16 des Injektors 14 wird geöffnet, sodass aus der Brennkammer Gasgemisch in den Arbeitsraum 18 einströmen kann.

Wasser kann jetzt aus dem Arbeitsraum 18 durch eine (im Normalbetrieb verschlossene) Rücklaufleitung 28 zurück in den Vorratsbehälter 22 abfließen. Die Rücklaufleitung 28 und die Zuleitung 24 können identisch sein, wenn die Förderpumpe 20 so geschaltet werden kann, dass sie das Zurückströmen von Wasser aus dem Injektor 14 den Vorratsbehälter 22 ermöglicht.

Das Abfließen des Wassers wird unterstützt durch einen Kompressionshub eines (nicht dargestellten) Kolbens in der Brennkammer, der wenigstens einen Teil des in der Brennkammer befindlichen Gasgemischs durch das geöffnete Ventil 16 in den Arbeitsraum 18 des Injektors presst. Durch den Druckanstieg im Arbeitsraum 18 wird zumindest ein Teil des im Arbeitsraum 18 befindlichen Wassers verdrängt, dieses fließt über die Rücklaufleitung 28 zurück in den Vorratsbehälter 22.

Der Kompressionshub des Kolbens erfolgt bereits ohne Einspritzung von Kraftstoff in die Brennkammer, sodass lediglich das Gasgemisch, vorzugsweise reine Umgebungsluft, in den Arbeitsraum 18 eingeleitet wird.

Um den notwendigen Verdrängungsgrad zu erreichen, kann der Kolben mehrere Kompressionshübe ausführen, es kann aber auch ein einziger Kompressionshub ausreichend sein. Werden mehrere Kompressionshübe ausgeführt, wird vorzugsweise das Ventil 16 zwischen den Kompressionshüben geschlossen, um ein Einleiten von Wasser in die Brennkammer zu verhindern.

Mündet der Injektor 14 nicht unmittelbar in die Brennkammer, sondern in einen Saugrohrabschnitt, muss dafür Sorge getragen werden, dass ein zwischen Saugrohr und Brennkammer angeordnetes Ventil geöffnet ist, wenn das Gasgemisch von der Brennkammer zum Injektor 14 strömt. Der Druckaufbau im Saugrohr wird durch eine geschlossene Drosselklappe und eine große Einlass-Spreizung unterstützt.

Es ist möglich, das Wasser praktisch vollständig aus dem Arbeitsraum 18 zu verdrängen, es hat sich aber als ausreichend herausgestellt, nur etwa 15 bis 50 % des im Arbeitsraum 18 vorhandenen Wassers aus diesem zu verdrängen, um Frostschäden zu verhindern.

## Patentansprüche

1. Verfahren zum Betreiben eines Einspritzsystems zum Einspritzen von Wasser in einen Einspritzbereich (12) einer Verbrennungskraftmaschine mittels eines Injektors (14) mit einem in einem Normalbetrieb der Verbrennungskraftmaschine wassergefüllten Arbeitsraum (18), **dadurch gekennzeichnet, dass** beim Abschalten der Verbrennungskraftmaschine wenigstens ein Teil des im Arbeitsraum (18) des Injektors (14) vorhandenen Wassers durch ein aus einer Brennkammer der Verbrennungskraftmaschine in den Arbeitsraum (18) einströmendes Gasgemisch verdrängt und der Arbeitsraum (18) wenigstens teilweise mit dem Gasgemisch gefüllt wird.

2. Verfahren nach Anspruch 1, **dadurch gekennzeichnet, dass** eine Förderpumpe (20), die im Normalbetrieb Wasser aus einem Vorratsbehälter (22) fördert, so geschaltet wird, dass Wasser aus dem Arbeitsraum (18) des Injektors (14) abfließen kann.

3. Verfahren nach einem der vorhergehenden Ansprüche, **dadurch gekennzeichnet, dass** eine Strömungsverbindung zwischen dem Arbeitsraum (18) und dem Einspritzbereich (12) hergestellt und ein Einströmen des Gasgemisches in den Einspritzbereich (12) ermöglicht wird.

4. Verfahren nach Anspruch 3, **dadurch gekennzeichnet, dass** ein Lufteinlassventil (26) so geschaltet wird, dass das Gasgemisch in den Einspritzbereich (12) einströmen kann.

5. Verfahren nach Anspruch 4, **dadurch gekennzeichnet, dass** ein durch einen in der Brennkammer angeordneten Kolben ausgeführter Kompressionshub ausgenutzt wird, um über das Lufteinlassventil (26) einströmendes Gasgemisch durch das Ventil (16) in den Injektor (14) zu pressen, wodurch im Arbeitsraum (18) des Injektors (14) befindliches Wasser wenigstens teilweise aus dem Arbeitsraum (18) verdrängt wird.

6. Verfahren nach einem der vorhergehenden Ansprüche, **dadurch gekennzeichnet, dass** das verdrängte Wasser in den Vorratsbehälter (22) abfließt.

7. Verfahren nach einem der vorhergehenden Ansprüche, **dadurch gekennzeichnet, dass** ein Teil des vor der Einleitung des Gasgemisches im Arbeitsraum (18) vorhandenen Wassers im Arbeitsraum (18) verbleibt.

## Claims

1. A method for operating an injection system for injecting water into an injection zone (12) of an Internal combustion engine by an Injector (14) with a working chamber (18) which is filled with water during normal operation of the internal combustion engine, **characterised in that** when the internal combustion engine is disconnected, at least some of the water, present in the working chamber (18) of the injector (14) is displaced by a gas mixture which flows into the working chamber (18) from a combustion chamber of the internal combustion engine and the working chamber (18) is at least partly filled with the gas mixture.

2. A method according to claim 1, **characterised In that** a feed pump (20) which, during normal operation, conveys water out of a reservoir (22), is connected such that water can flow off out of the working chamber (18) of the injector (14).

3. A method according to either of the preceding claims, **characterised in that** a flow connection is produced between the working chamber (18) and the injection zone (12) and it is possible for the gas mixture to flow into the injection zone (12).

4. A method according to claim 3, **characterised in that** an air Inlet valve (26) is connected so that the gas mixture can flow into the injection zone (12).

5. A method according to claim 4, **characterised in that** a compression stroke, performed by a piston arranged in the combustion chamber, is utilised to press a gas mixture, which flows in via the air Inlet valve (26), through the valve (16) into the Injector (14), as a result of which water located in the working chamber (18) of the injector (14) is at least partly displaced out of the working chamber (18).

6. A method according to any one of the preceding claims, **characterised in that** the displaced water flows off into the reservoir (22).

7. A method according to any one of the preceding claims, **characterised in that** some of the water present In the working chamber (18) before the introduction of the gas mixture remains in the working chamber (18).

## Revendications

1. Procédé de gestion d'un système d'injection destiné à injecter de l'eau dans une zone d'injection (12) d'un moteur à combustion interne au moyen d'un injecteur (14) comprenant une chambre de travail (18) remplie d'eau en fonctionnement normal du moteur à combustion interne,
**caractérisé en ce que**
lors de l'arrêt du moteur à combustion interne au moins une partie de l'eau présente dans la chambre de travail (18) de l'injecteur (14) est refoulée par un mélange gazeux pénétrant dans la chambre de travail (18) en sortant d'une chambre de combustion du moteur à combustion interne et la chambre de travail (18) est remplie au moins partiellement par le mélange gazeux.

2. Procédé conforme à la revendication 1,
**caractérisé en ce que**
une pompe de circulation (20) qui, en fonctionnement normal refoule de l'eau d'un réservoir de stockage (22) est branchée de sorte que l'eau puisse sortir de la chambre de travail (18) de l'injecteur (14).

3. Procédé conforme à l'une des revendications précédentes,
**caractérisé en ce qu'**
une liaison fluidique est réalisée entre la chambre de travail (18) et la zone d'injection (12) et une introduction du mélange gazeux dans la zone d'injection (12) est possible.

4. Procédé conforme à la revendication 3,
**caractérisé en ce qu'**
une soupape d'introduction d'air (26) est branchée de sorte que le mélange gazeux puisse pénétrer dans la zone d'injection (12).

5. Procédé conforme à la revendication 4,
**caractérisé en ce qu'**
une course de compression exercée par un piston monté dans la chambre de combustion est utilisée pour introduire à force dans l'injecteur (14) par la soupape (16) le mélange gazeux introduit par la soupape d'entrée d'air (26) de sorte que l'eau se trouvant dans la chambre de travail (18) de l'injecteur (14) soit au moins partiellement refoulée hors de la chambre de travail (18).

6. Procédé conforme à l'une des revendications précédentes,
**caractérisé en ce que**
l'eau refoulée pénètre dans le réservoir de stockage (22).

7. Procédé conforme à l'une des revendications précédentes,
**caractérisé en ce qu'**
une partie de l'eau présente dans la chambre de travail (18) avant l'introduction du mélange gazeux reste dans cette chambre de travail (18).
